# FASCICULE DE BREVET EUROPEEN

(11) **EP 3 417 158 B1**
(45) Date de publication et mention de la délivrance du brevet: **16.12.2020**
(21) Numéro de dépôt: 17705378.2
(22) Date de dépôt: 14.02.2017
(51) Int. Cl.: F02B 29/04, F04B 39/06, F02M 31/20

(54) **DISPOSITIF DE REFROIDISSEMENT D'AIR DE SURALIMENTATION D'UN MOTEUR COMPORTANT DES MOYENS DE CHAUFFAGE**
VORRICHTUNG ZUR KÜHLUNG VON LADELUFT EINES MOTORS MIT EINER HEIZVORRICHTUNG
DEVICE FOR COOLING CHARGE AIR OF AN ENGINE COMPRISING HEATING MEANS

(30) Priorité: 18.02.2016 FR 1651332
(43) Date de publication de la demande: 26.12.2018
(73) Titulaire: Renault S.A.S., 92100 Boulogne-Billancourt (FR)
(72) Inventeur: LEFEBVRE, Alain, 91630 Leudeville (FR)
(86) Numéro de dépôt international: PCT/EP2017/053303
(87) Numéro de publication internationale: WO 2017/140682

(56) Documents cités:
- WO-A1-2009/130083
- FR-A1- 2 914 026
- FR-A1- 2 959 779
- US-A1- 2013 000 612
- US-A1- 2014 150 755
- US-A1- 2015 167 539

## Description

### DOMAINE TECHNIQUE DE L'INVENTION

L'invention concerne un dispositif de refroidissement d'air de suralimentation d'un moteur comportant des moyens de chauffage.

La présente invention concerne plus particulièrement un dispositif de refroidissement d'air de suralimentation d'un moteur, comportant un refroidisseur d'air de suralimentation pour refroidir, en amont d'une partie d'admission d'air du moteur, un air issu d'un compresseur de suralimentation lié à rotation à une turbine qui est entraînée en rotation par des gaz d'échappement du moteur, ledit refroidisseur d'air de suralimentation étant agencé sensiblement verticalement de manière à permettre un écoulement des condensats vers des moyens de récupération destinés à recueillir lesdits condensats.

### ÉTAT DE LA TECHNIQUE

On connaît de l'état de la technique des exemples de dispositif de refroidissement d'air de suralimentation d'un moteur à combustion interne, en particulier pourvu d'un dispositif de recirculation des gaz d'échappement du moteur.

Le principe de la recirculation des gaz d'échappement (ou brûlés) consiste à introduire à l'admission du moteur un mélange formé d'air frais et d'une partie des gaz d'échappement. On désigne généralement la mise en œuvre de ce principe par l'acronyme « EGR » pour « *Exhaust Gas Recirculation* » en anglais.

Le principe de recirculation des gaz d'échappement ou « EGR » est fréquemment utilisé dans les moteurs à combustion suralimentés, Diesel ou essence, en raison des objectifs de performances et de dépollution recherchés.

En effet, la recirculation des gaz d'échappement permet de limiter les émissions de NOx (à proportion de la fraction des gaz d'échappement recyclés) mais réduit toutefois les performances du moteur.

On distingue dans l'état de la technique deux conceptions de dispositif (ou système) de recirculation des gaz d'échappement, d'une part la recirculation « à haute pression » et, d'autre part, la recirculation « à basse pression ».

La recirculation à basse pression consiste à prélever les gaz d'échappement après la turbine, en aval du filtre à particules, pour les réinjecter en amont du compresseur d'air de suralimentation (en variante en amont du refroidisseur d'air de suralimentation situé en aval du compresseur) tandis que la recirculation à haute pression consiste à prélever les gaz d'échappement en amont de la turbine pour les réinjecter en aval du compresseur.

Le refroidissement de l'air de suralimentation prévu dans un dispositif de recirculation des gaz d'échappement, dit EGR, des moteurs actuels (Diesel ou à allumage commandé) est par exemple assuré par un ou des échangeurs thermique.

Le refroidissement de l'air en augmente avantageusement la densité permettant alors d'injecter plus de carburant, au bénéfice final d'un meilleur mélange et par conséquent l'obtention de meilleures performances du moteur.

Le refroidissement des gaz d'échappement mis en recirculation peut être réalisé au moyen d'un échangeur thermique agencé dans le conduit de recirculation du dispositif, le fluide caloporteur utilisé étant généralement constitué par le liquide de refroidissement du moteur.

Selon le dispositif de recirculation des gaz d'échappement, les gaz d'échappement peuvent être refroidis au moins une fois dans un tel échangeur thermique.

Afin de simplifier un dispositif de recirculation des gaz d'échappement et de s'affranchir de l'utilisation d'un tel échangeur thermique qui s'avère souvent aussi encombrant que coûteux, il est aussi connu de refroidir les gaz d'échappement en recirculation par l'intermédiaire du refroidisseur d'air de suralimentation.

Les gaz d'échappement en recirculation sont alors refroidis une fois par le refroidisseur, en variante deux fois successivement dans l'échangeur thermique puis dans le refroidisseur d'air de suralimentation.

Cependant étant donnée la composition des gaz d'échappement ainsi introduits dans le refroidisseur d'air de suralimentation, on assiste à la formation d'acides sur les parois froides qui résulte de la condensation de ces composés avec la vapeur contenue dans l'air extérieur et les gaz d'échappement, en particulier pendant les phases de démarrage et de fonctionnement à froid du moteur.

De tels acides corrosifs sont susceptibles d'attaquer les parois de l'échangeur formant le refroidisseur d'air de suralimentation et de l'endommager, en provoquant notamment des percements dans les matériaux utilisés, voire encore des défaillances du moteur.

Le document FR-2.893.677 au nom de la Demanderesse propose de remédier à ces inconvénients en disposant le refroidisseur de telle manière que la longueur du refroidisseur corresponde sensiblement à la différence de niveaux de hauteur entre les deux compartiments respectivement agencés chacun à l'une des extrémités du faisceau de tubes.

Selon les enseignements de ce document, il est connu d'agencer le refroidisseur d'air de suralimentation sensiblement verticalement pour permettre un écoulement naturel des condensats vers les moyens de récupération situés en partie basse afin de les recueillir.

Les condensats sont ensuite éliminés en fonctionnement en étant emportés par le flux des gaz du mélange traversant le refroidisseur jusqu'à être introduit à l'admission du moteur à combustion interne.

On se reportera avantageusement à ce document pour de plus amples détails sur l'agencement et/ou la conception d'un tel refroidisseur d'air de suralimentation destiné à être utilisé dans un moteur à combustion interne comportant un dispositif de recirculation des gaz d'échappement.

Les documents FR-2959779-A1 et FR-2914026-A1 décrivent d'autres dispositifs du même type comportant un refroidisseur agencé verticalement. Les futures normes de dépollution vont nécessiter d'étendre l'utilisation du dispositif de recirculation des gaz d'échappement à des températures plus basses, favorisant encore davantage la formation de condensats dans le refroidisseur d'air de suralimentation.

Les explications qui viennent d'être données ne constituent toutefois qu'un exemple non limitatif. En effet, la formation de condensats dans le refroidisseur d'air de suralimentation n'est pas limitée au moteur comportant un dispositif de recirculation des gaz d'échappement, « à basse pression » comme « à haute pression ».

A titre d'exemple, la formation de condensats peut aussi être issue d'une condensation de l'air comprimé circulant à l'intérieur du faisceau du refroidisseur d'air de suralimentation qui, de type air-air, est traversé par un air de refroidissement plus froid. Le traitement des condensats intervient ainsi même en l'absence de dispositif de recirculation des gaz d'échappement.

Dans des conditions particulières de fonctionnement, notamment lorsque la température de l'air extérieur (ou ambiant) est inférieure à zéro degré Celsius (0°C), les condensats présents dans les moyens de récupération dédiés sont susceptibles de se solidifier en gelant, formant par exemple du givre ou de la glace dans le circuit d'admission et plus précisément dans les moyens de récupération du refroidisseur d'air de suralimentation.

Dans ces conditions, les condensats peuvent former un bouchon plus ou moins important qui va s'opposer à la circulation de l'air vers l'admission du moteur et ce faisant peut aller jusqu'à empêcher le démarrage du moteur.

Le but de la présente invention est notamment de remédier à ces inconvénients et de proposer une solution pour agir sur les condensats présents dans les moyens de récupération susceptibles de se solidifier lorsque la température extérieure de l'air est inférieure à 0°C.

### BREF RESUME DE L'INVENTION

Dans ce but, l'invention propose un dispositif de refroidissement d'air de suralimentation selon la revendication 1.

Selon d'autres caractéristiques optionnelles de l'invention :
- les moyens de chauffage sont agencés au niveau des moyens de récupération afin de créer un changement d'état d'au moins une partie desdits condensats ;
- lesdits moyens de chauffage comportent au moins une résistance électrique ;
- les moyens de chauffage sont commandés sélectivement, respectivement entre un état passif et un état actif de chauffage, en fonction d'au moins un paramètre de fonctionnement ;
- lesdits moyens de chauffage sont commandés de l'état passif à l'état actif lorsque, ladite la température extérieure étant inférieure ou égale à 0°C, les condensats recueillis par les moyens de récupération sont susceptibles de se solidifier ;
- le dispositif comporte des moyens de mesure de température pour mesurer une température intérieure au niveau desdits moyens de récupération des condensats ;
- lesdits moyens de régulation sont montés mobiles entre au moins une position ouverte dans laquelle lesdits moyens de régulation autorisent la circulation à travers le conduit de dérivation et au moins une position fermée dans laquelle lesdits moyens de régulation interdisent la circulation à travers le conduit de dérivation ;
- le dispositif est relié à un dispositif de recirculation des gaz d'échappement comportant au moins un conduit de recirculation des gaz d'échappement pour prélever les gaz d'échappement après la turbine, en aval d'un dispositif de post-traitement des gaz d'échappement, et pour les réinjecter en amont du compresseur d'air de suralimentation.

Avantageusement, les moyens de chauffage selon l'invention sont commandés sélectivement en fonction notamment de la valeur de la température extérieure de manière à chauffer les condensats recueillis par les moyens de récupération associés au refroidisseur d'air de suralimentation.

Grâce aux moyens de chauffage selon l'invention, les condensats sont susceptibles d'être au moins en partie liquéfiés, voire évaporés, lorsqu'une solidification est intervenue ou pour s'opposer à une telle solidification.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique qui représente un exemple de moteur à combustion interne comportant un dispositif de recirculation des gaz d'échappement du type à « basse pression » dans lequel le dispositif EGR comporte des moyens de chauffage et avantageusement des moyens de mesure de la température au niveau des moyens de récupération des condensats ;
- la figure 2 est un diagramme logique qui illustre un exemple d'étapes d'un procédé de commande du dispositif EGR selon l'exemple représenté à la figure 1 ;
- la figure 3 est une vue schématique qui représente un exemple de moteur à combustion interne comportant un dispositif de recirculation des gaz d'échappement analogue à celui de la figure 1 et qui illustre un mode de réalisation de l'invention dans lequel le dispositif EGR comporte notamment un conduit de dérivation (dit de by-pass) du refroidisseur d'air de suralimentation et des moyens de régulation associés ;
- la figure 4 est un diagramme logique qui illustre un exemple des étapes d'un procédé de commande du dispositif EGR selon le mode de réalisation représenté à la figure 3.

### DESCRIPTION DETAILLEE DES FIGURES

Dans la suite de la description, on adoptera par convention et de manière non limitative, l'utilisation des termes « amont » et « aval » en référence au sens de circulation des gaz, notamment les gaz d'échappement en recirculation, ou encore « haut » et « bas » en référence à une orientation verticale V correspondant à la gravité terrestre.

Dans la suite de la description, des éléments présentant une structure identique ou des fonctions analogues seront désignés par les mêmes références.

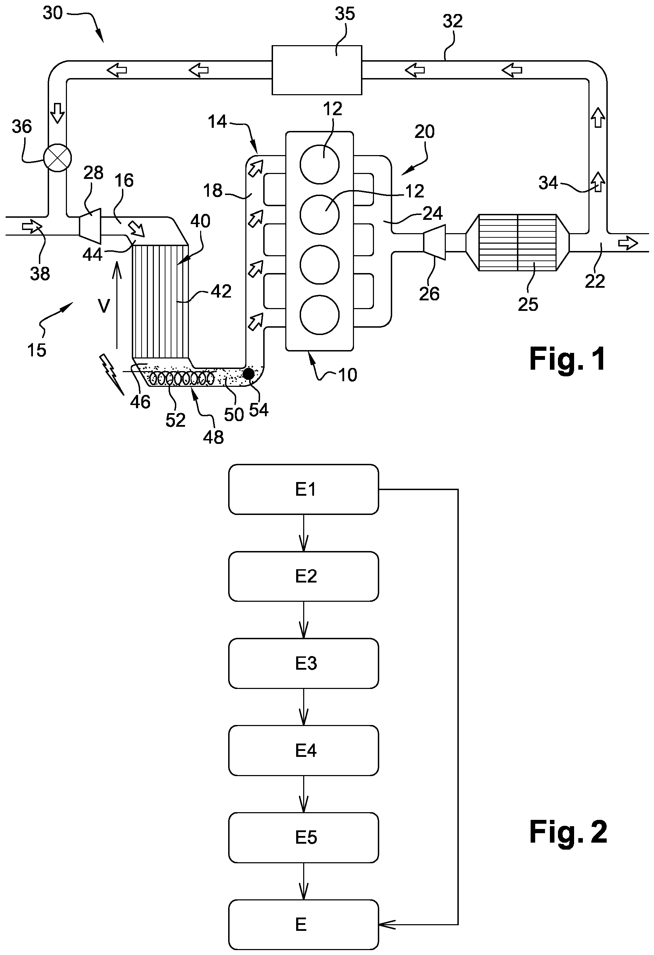

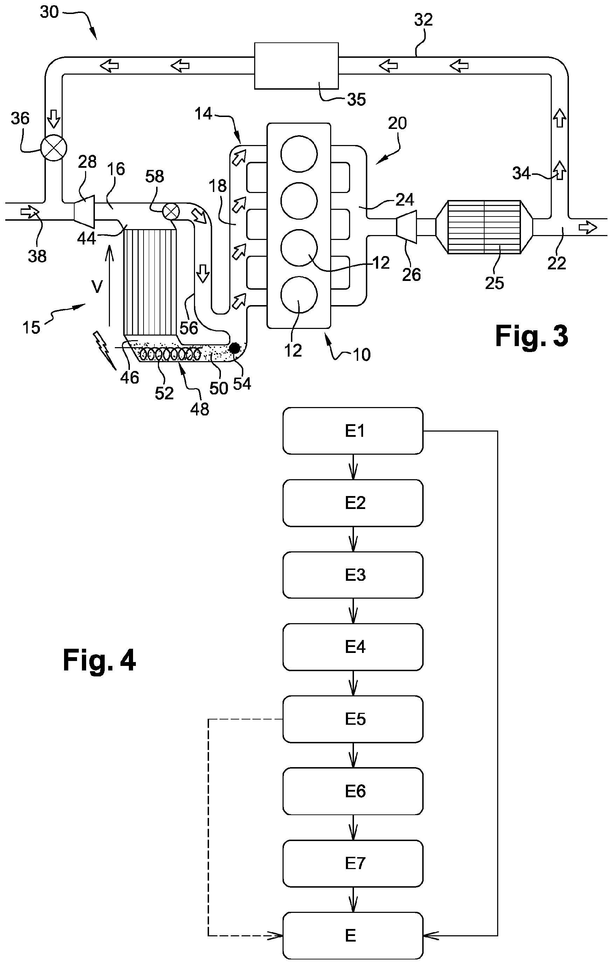

On a représenté sur la figure 1, un exemple d'un moteur 10 à combustion interne, notamment destiné à équiper un véhicule automobile (non représenté), et sur la figure 3 un mode de réalisation selon l'invention d'un tel moteur.

Le moteur 10 est un moteur, Diesel ou essence, comportant notamment des cylindres 12, par exemple ici quatre cylindres qui sont représentés schématiquement sur les figures 1 et 3.

Le moteur 10 comporte, en amont, une partie 14 d'admission par laquelle est notamment admis l'air frais destiné à être mélangé au carburant dans les cylindres 12.

Le moteur 10 de type suralimenté comporte un dispositif 15 de refroidissement d'air de suralimentation qui sera décrit plus en détails ultérieurement.

La partie 14 d'admission du moteur 10 comporte au moins un conduit 16 d'admission relié par exemple aux cylindres 12 du moteur 10 par un collecteur 18 d'admission.

Le moteur 10 comporte, en aval, une partie 20 d'échappement destinée à permettre l'évacuation des gaz d'échappement (ou brûlés) lors de la combustion.

La partie 20 d'échappement du moteur 10 comporte au moins un conduit 22 d'échappement relié par exemple aux cylindres 12 du moteur 10 par un collecteur 24 d'échappement.

Le conduit 22 d'échappement comporte au moins une turbine 26 destinée à être entraînée par les gaz d'échappement et reliée par un axe d'entraînement (non représenté) à un compresseur 28 d'air de suralimentation destiné à comprimer notamment l'air frais introduit dans la partie 14 d'admission du moteur 10.

De préférence, le moteur 10 comporte un dispositif de post-traitement des gaz d'échappement, comprenant par exemple un filtre 25 à particules pour assurer une dépollution des gaz d'échappement rejetés vers l'extérieur, dans l'atmosphère.

Avantageusement, le moteur 10 à combustion interne comporte un dispositif 30 de recirculation des gaz d'échappement, dit EGR.

Le dispositif 30 de recirculation des gaz d'échappement comporte au moins un conduit 32 de recirculation d'une partie des gaz d'échappement pour injecter sélectivement ces gaz d'échappement dans la partie 14 d'admission du moteur 10.

Le conduit 32 de recirculation des gaz d'échappement est relié à la partie 20 d'échappement pour prélever une partie des gaz d'échappement désignée ci-après par la référence 34 et par au moins une flèche sur les figures 1 et 3.

L'autre partie des gaz d'échappement est évacuée par le conduit 22 d'échappement à l'extérieur du véhicule, dans l'atmosphère.

Avantageusement, les gaz 34 d'échappement mis en recirculation par l'intermédiaire du conduit 32 du dispositif 30 de recirculation des gaz d'échappement ainsi que les autres gaz d'échappement évacués sont respectivement préalablement traités par le filtre 25 à particules.

Le conduit 32 de recirculation des gaz d'échappement est raccordé à une extrémité au conduit 22 d'échappement et à l'autre extrémité au conduit 16 d'admission.

De préférence, le conduit 32 de recirculation des gaz d'échappement est raccordé au conduit 22 d'échappement en aval du filtre 25 à particules et au conduit 16 d'admission en amont du compresseur 28.

De préférence, le dispositif 30 de recirculation des gaz du moteur 10 est un dispositif EGR du type « basse pression ».

En variante et tel qu'indiqué précédemment, le moteur 10 pourrait ne pas comporter un tel dispositif 30 de recirculation des gaz ou encore comporter un dispositif 30 de recirculation des gaz de type « à haute pression ».

De préférence, le dispositif 30 de recirculation des gaz d'échappement comporte au moins un échangeur 35 thermique qui est agencé dans le conduit 32 de recirculation des gaz d'échappement.

L'échangeur 35 thermique est destiné à refroidir les gaz d'échappement circulant dans le conduit 32 de recirculation des gaz d'échappement et utilise par exemple le liquide de refroidissement du moteur comme fluide caloporteur.

Le dispositif 30 de recirculation des gaz d'échappement comporte des moyens 36 de régulation pour réguler en fonctionnement la quantité de gaz d'échappement introduit dans la partie 14 d'admission.

Les moyens 36 de régulation sont par exemple constitués par une vanne, communément appelée vanne EGR.

Le raccordement du conduit 32 de recirculation des gaz d'échappement en aval du filtre 25 à particules permet avantageusement de limiter l'encrassement de la vanne 36.

La vanne 36 est agencée dans le conduit 32 de recirculation des gaz d'échappement, respectivement en amont du raccordement dudit conduit 32 avec le conduit 16 d'admission et du compresseur 28 d'air de suralimentation.

Sur les figures 1 et 3, on a représenté par une flèche un flux d'air 38 atmosphérique provenant de l'extérieur et qui est avantageusement filtré.

En fonctionnement du moteur 10, l'air 38 (encore appelé parfois « air frais ») est destiné à être comprimé par le compresseur 28 d'air de suralimentation avant d'être injecté dans la partie 14 d'admission du moteur 10.

En fonction de paramètres de fonctionnement du moteur 10, la vanne 36 du dispositif 30 de recirculation des gaz d'échappement est commandée en ouverture pour introduire dans le flux d'air 38 une quantité déterminée des gaz 34 d'échappement issus de la recirculation afin d'obtenir un mélange.

Le moteur 10 suralimenté comporte par exemple le dispositif 15 de refroidissement d'air de suralimentation décrit ci-après.

Le dispositif 15 de refroidissement d'air de suralimentation comporte au moins un refroidisseur 40 d'air de suralimentation pour refroidir l'air 38 issu du compresseur 28 de suralimentation et/ou ledit mélange formé d'air 38 issu du compresseur 28 de suralimentation et desdits gaz 34 d'échappement issus de la recirculation en présence d'un dispositif 30 de recirculation des gaz d'échappement.

Le refroidisseur 40 d'air de suralimentation est agencé en aval dudit compresseur 28 de suralimentation.

Tel que représenté sur les figures 1 et 3, le refroidisseur 40 d'air de suralimentation est agencé dans le conduit 16 d'admission en amont de la partie 14 d'admission, plus précisément en amont du collecteur 18 d'admission.

Le refroidisseur 40 d'air de suralimentation comporte principalement un faisceau 42 de tubes dans lesquels circule ledit mélange issu du compresseur 28 de suralimentation formé de l'air 38 et desdits gaz 34 d'échappement.

Le refroidisseur 40 d'air de suralimentation comporte à chaque extrémité du faisceau 42 respectivement une boîte 44 d'entrée et une boîte 46 de sortie.

Les gaz 34 d'échappement mis en recirculation dans le dispositif 30 comportent par exemple des nitrates, des sulfures, des chlorures et des composés susceptibles de générer des acides forts ou faibles en présence d'eau liquide.

Pendant les phases de démarrage du moteur 10 où de l'air 38 humide est admis à une température inférieure à 100°C ou encore lors du refroidissement, la vapeur d'eau peut se condenser à l'intérieur du refroidisseur 40 d'air de suralimentation et former alors avec les gaz 34 d'échappement des acides susceptibles d'attaquer les matériaux constituant les parois du refroidisseur, généralement réalisées en aluminium.

Avantageusement, le refroidisseur 40 d'air de suralimentation comporte des moyens 48 de récupération pour recueillir ces produits de condensation, ci-après appelés condensats 50.

On a représenté lesdits condensats 50 par des points afin de les matérialiser sur les figures 1 et 3.

Le refroidisseur 40 d'air de suralimentation est agencé sensiblement verticalement suivant la flèche V représentée sur les figures 1 et 3.

Tel qu'expliqué en préambule, un tel agencement du refroidisseur 40 d'air de suralimentation permet d'avoir un écoulement par gravité des condensats 50 vers les moyens 48 de récupération associés.

Les moyens 48 de récupération sont par exemple intégrés à la boîte 46 de sortie qui est disposée en partie basse du refroidisseur 40 d'air de suralimentation.

Avantageusement, les moyens 48 de récupération sont réalisés dans des matériaux appropriés aptes à résister aux acides présents dans les condensats 50 recueillis.

Les condensats 50 recueillis par les moyens 48 de récupération sont généralement au moins en partie éliminés en fonctionnement en étant entraînés par l'air 38 (ou le mélange d'air 38 et de gaz 34 d'échappement) circulant vers l'admission du moteur 10.

Dans certaines conditions de fonctionnement, en particulier lorsque la température extérieure de l'air est inférieure ou égale à 0°C, les condensats 50 recueillis sont susceptibles de geler et en se solidifiant d'obstruer alors tout ou partie de la section, s'opposant au passage de l'air 38 ou du mélange.

On illustrera ci-après les problèmes visés par l'invention au moyen d'un exemple toutefois donné à titre non limitatif.

Lors de l'utilisation du véhicule, le fonctionnement du moteur 10 va s'accompagner d'une production de condensats 50 pouvant être plus ou moins importantes selon certaines conditions (température, pression, régime moteur, etc.).

Après un arrêt prolongé du véhicule, comme une nuit de stationnement, une température extérieure négative est alors susceptible de provoquer une solidification des condensats 50 non éliminés recueillis par les moyens 48 de récupération.

Or, les conséquences d'une telle solidification peuvent être importantes et aller jusqu'à empêcher le démarrage du moteur 10 du véhicule, typiquement le lendemain matin.

Avantageusement, le dispositif 15 de refroidissement d'air de suralimentation du moteur 10 comporte des moyens 52 de chauffage pour chauffer les condensats 50 recueillis par les moyens 48 de récupération.

Grâce à la chaleur produite par les moyens 52 de chauffage, au moins une partie des condensats 50 est susceptible d'être liquéfiée par exemple après un arrêt ou de ne pas pouvoir se solidifier dans certaines conditions de température.

Selon la puissance de chauffe développée par lesdits moyens 52 de chauffage, les condensats 50 sont susceptibles d'être évaporés, ce qui tend à améliorer le démarrage du moteur 10 pour des températures extérieures inférieures à 0°C.

Pour reprendre l'exemple précédent, les moyens 52 de chauffage vont permettre de liquéfier, c'est à dire de faire fondre, tout ou partie des condensats 50 présents au niveau des moyens 48 de récupération et se trouvant notamment à l'état de glace en raison de la température extérieure inférieure ou égale à 0°C.

En outre, tout ou partie des condensats 50 est apte à changer d'état, passant d'un état de liquide à un état de vapeur. Pour ce faire, le temps durant lequel lesdits moyens 52 de chauffage sont à l'état actif est prolongé.

Avantageusement, à l'état de vapeur, les condensats 50 se diluent dans le flux d'air comprimé circulant en direction de l'admission, notamment par aspiration au niveau d'un piquage en sortie du refroidisseur 40 d'air de suralimentation.

De préférence, les moyens 52 de chauffage sont agencés au voisinage des moyens 48 de récupération des condensats 50.

Lesdits moyens 48 de récupération peuvent être par exemple une boîte collectrice de sortie d'air de suralimentation conformée pour recevoir lesdits moyens 52 de chauffage.

De préférence, lesdits moyens 52 de chauffage comportent une ou plusieurs résistances électriques qui sont susceptibles d'être agencées au niveau et/ou à proximité des moyens 48 de récupération afin de pouvoir chauffer lesdits condensats 50.

De préférence, le dispositif 15 de refroidissement d'air de suralimentation comporte des moyens 54 de mesure de température, tels qu'une sonde, pour mesurer la température au niveau desdits moyens 48 de récupération des condensats 50.

La sonde 54 peut être intégrée dans la boîte collectrice de sortie du refroidisseur 40 d'air de suralimentation 40.

Avantageusement, les moyens 52 de chauffage sont respectivement commandés entre un état passif et un état actif, état actif dans lequel lesdits moyens 52 de chauffage produisent de la chaleur pour chauffer les condensats 50.

Dans le cas de moyens 52 de chauffage formés par au moins une résistance électrique, l'état actif est obtenu en alimentant électriquement au moins une résistance de chauffage et l'état passif en interrompant l'alimentation électrique.

Lorsque les moyens 52 de chauffage sont formés par une ou des résistances électriques, on limite avantageusement la consommation électrique en ne les alimentant pas en permanence mais en les commandant sélectivement, respectivement entre lesdits états passif et actif.

De préférence, les moyens 52 de chauffage sont commandés sélectivement en fonction d'au moins un paramètre de fonctionnement.

On a représenté sur la figure 2 un diagramme logique pour illustrer un exemple des étapes d'un procédé de commande des moyens 52 de chauffage selon l'exemple représenté à la figure 1.

L'exemple correspond à une mise en œuvre sélective des moyens 52 de chauffage pendant une phase de démarrage du moteur 10. Lors d'une phase de démarrage, on recherche à déterminer s'il est nécessaire de faire changer d'état, en particulier liquéfier voire évaporer, tout ou partie des condensats 50 susceptibles d'avoir gelés en raison d'une température extérieure inférieure ou égale à 0°C.

Le procédé de commande comporte une première étape E1 consistant à mesurer au moins la température extérieure de l'air atmosphérique pour déterminer si la température extérieure est supérieure ou inférieure à la température de 0°C.

On rappelle que la température de 0°C correspond à la température de seuil en deçà de laquelle l'eau présente dans les condensats 50 va changer d'état, passant de l'état liquide à l'état solide (glace).

Grâce à cette première étape E1, on détermine si un chauffage doit ou non être effectué en raison d'un risque de gel, de solidification, des condensats 50 présents dans les moyens 48 de récupération.

De préférence, les moyens 52 de chauffage occupent par défaut l'état passif dans lequel il n'y a pas de chauffage, de chaleur produite, afin d'optimiser la consommation électrique lorsqu'au moins une résistance est utilisée.

Si la température mesurée lors de l'étape E1 est supérieure à la température de 0°C, les moyens 52 de chauffage sont alors maintenus à l'état passif.

Le démarrage du moteur 10 peut être effectué sans risque de rencontrer de problème lié à la présence de condensats 50 gelés de nature à compromettre le bon fonctionnement du moteur 10 en obstruant l'admission.

C'est ce qu'illustre sur la figure 2 la flèche reliant directement la première étape E1 à l'étape E finale du diagramme logique qui correspond à un fonctionnement normal du moteur 10 après démarrage.

Si la température mesurée lors de l'étape E1 est inférieure à la valeur seuil de 0°C, les moyens 52 de chauffage sont alors activés pour chauffer les condensats 50.

Avantageusement, les moyens 52 de chauffage sont commandés de l'état passif à l'état actif lorsque, ladite la température extérieure étant inférieure ou égale à 0°C, les condensats 50 recueillis par les moyens 48 de récupération sont susceptibles de se solidifier.

Par rapport au paramètre de température extérieure, on comprendra que les moyens 50 de chauffage peuvent être utilisés tant lors de la phase de démarrage comme dans l'exemple qu'ensuite au cours également d'une phase de fonctionnement du moteur 10 afin notamment de prévenir une nouvelle solidification des condensats 50.

La deuxième étape E2 consiste à chauffer les condensats 50 avec les moyens 52 de chauffage afin de liquéfier au moins une partie des condensats 50 recueillis ou de maintenir un chauffage pour éviter une obstruction de l'admission du moteur 10 par un bouchon qui se formerait par solidification des condensats 50.

La troisième étape E3 consiste à démarrer le moteur 10 à combustion interne.

De préférence, le démarrage est effectué après au moins une certaine durée de chauffage. Le chauffage selon la deuxième étape E2 est maintenu pendant au moins une durée déterminée, par exemple fixée pour varier en fonction de la valeur de la température extérieure mesurée.

Par comparaison, une durée de chauffage de l'ordre de 5 secondes pour une résistance d'une puissance de 1kW serait sensiblement équivalente à celle de la phase de préchauffage réalisée lors du démarrage d'un moteur de type Diesel avec des bougies de préchauffage.

Avantageusement, le chauffage selon la deuxième étape E2 est imperceptible par le conducteur et ne retarde en rien le démarrage du moteur 10.

Si le dispositif 15 de refroidissement d'air de suralimentation en comporte, les moyens 54 de mesure de la température intérieure au niveau desdits moyens 48 de récupération des condensats 50 sont utilisés pour commander les moyens 52 de chauffage.

Le procédé de commande comporte par exemple une quatrième étape E4 consistant à mesurer, avec les moyens 54 de mesure, la température intérieure au niveau des condensats 50 recueillis par les moyens 48 de récupération.

En fonction de la valeur de la température intérieure mesurée par les moyens 54 de mesure, on commande ou non l'interruption du chauffage par les moyens 52 de chauffage.

Si la température intérieure mesurée par les moyens 54 est supérieure à 0°C, les moyens 52 de chauffage passent alors, suivant une cinquième étape E5, de l'état actif à l'état passif occupé initialement.

Avantageusement, les moyens 54 de mesure de la température au niveau desdits moyens 48 de récupération des condensats 50 sont utilisés pour ajuster la durée de chauffage et commander lesdits moyens 52 de chauffage en fonction de ladite température mesurée.

En variante, la quatrième étape E4 est supprimée lorsque ledit dispositif 15 de refroidissement d'air de suralimentation ne comporte pas de tels moyens 54 de mesure.

En l'absence de moyens 54 de mesure, les moyens 52 de chauffage restent avantageusement à l'état actif pendant une durée déterminée puis sont automatiquement arrêtés.

La cinquième étape E5 du procédé de commande consiste à commander le changement d'état des moyens 52 de chauffage, respectivement de l'état actif à l'état passif, afin d'interrompre le chauffage des condensats 50.

La cinquième étape E5 d'interruption du chauffage par les moyens 52 de chauffage pouvant être réalisée après une durée fixe ou en fonction d'un paramètre comme la température intérieure mesurée.

La durée de chauffage par les moyens 52 de chauffage peut avantageusement varier en fonction de la température extérieure, augmentant par exemple lorsque la valeur négative de ladite température extérieure augmente.

Bien que prédéterminée, la durée de chauffage peut par exemple varier selon une table de valeurs en fonction de la valeur de la température extérieure mesurée.

Bien entendu l'exemple de procédé de commande des moyens 52 de chauffage qui vient d'être décrit en référence à la figure 2 dans le cas d'un démarrage du moteur 10 ne constitue qu'un exemple non limitatif.

Avantageusement, les moyens 52 de chauffage sont également susceptibles d'être utilisés lors du fonctionnement du moteur 10 de manière à éviter la solidification des condensats 50, soit la formation de glace ou de givre au niveau des moyens 48 de récupération.

Tel serait en particulier le cas si la température mesurée par les moyens 54 de mesure de la température au niveau des moyens 48 de récupération était à nouveau inférieure à 0°C après avoir procédé à l'arrêt du chauffage par les moyens 52 de chauffage.

En variante non représentée, la quatrième étape E4 du procédé de commande pourrait être répétée de manière itérative avec un intervalle de temps donné pour déterminer si les moyens 52 de chauffage doivent demeurer à l'état passif ou au contraire être à nouveau alimentés pour passer à l'état actif.

Grâce aux moyens 52 de chauffage, les condensats 50 sont au moins en partie à l'état liquide et ainsi susceptibles d'être éliminés dans le moteur 10 en fonctionnement.

On décrira ci-après en référence aux figures 3 et 4 les spécificités du mode de réalisation selon l'invention par comparaison avec l'exemple présenté sur les figure 1 et 2.

Le dispositif 15 de refroidissement d'air de suralimentation comporte ainsi selon l'invention au moins un conduit 56 de dérivation, dit de by-pass, du refroidisseur 40 d'air de suralimentation et des moyens 58 de régulation associés audit conduit 56.

Avantageusement, un tel conduit 56 de dérivation permet de ne pas faire circuler l'air 38 (ou le mélange d'air 38 et de gaz 34 d'échappement) à travers le refroidisseur 40 d'air de suralimentation dans certaines conditions.

Les moyens 58 de régulation, tels qu'une vanne, sont montés mobiles entre au moins une position ouverte et une position fermée pour réguler la circulation dans le conduit 56 de dérivation.

La position ouverte correspond à une position dans laquelle lesdits moyens 58 de régulation autorisent une circulation vers le conduit 56 de dérivation.

L'air 38 ou le mélange circule alors directement jusqu'à la partie 14 d'admission du moteur 10, sans traverser le refroidisseur 40 d'air de suralimentation.

La position fermée correspond à une position dans laquelle lesdits moyens 58 de régulation interdisent une circulation vers le conduit 56 de dérivation.

En position fermée, la circulation de l'air 38 ou du mélange s'effectue par comparaison uniquement à travers le refroidisseur 40 d'air de suralimentation.

Avantageusement, les moyens 58 de régulation sont commandés sélectivement en ouverture ou en fermeture en fonction d'au moins un paramètre de fonctionnement.

De préférence, la valeur de la température extérieure de l'air est utilisée comme paramètre pour commander les moyens 58 de régulation.

Selon l'invention, lorsque la température extérieure est basse ou inférieure ou égale à 0°C, les moyens 58 de régulation sont commandés en position ouverte pour dériver l'air 38 ou le mélange dans le conduit 56 de dérivation et cela afin notamment de limiter la formation de condensats 50 dans le refroidisseur 40 d'air de suralimentation.

Le dispositif 15 de refroidissement d'air de suralimentation selon ce mode de réalisation comporte également des moyens 54 de mesure de la température intérieure au niveau des moyens 48 de récupération des condensats 50.

Tel que décrit précédemment, les moyens 54 de mesure de température sont susceptibles d'être utilisés pour commander sélectivement la durée du chauffage par les moyens 52 de chauffage en fonction de la température intérieure mesurée au niveau des moyens 48 de récupération.

Tel qu'indiqué précédemment, un pilotage de la durée de chauffage en fonction de la température intérieure mesurée par lesdits moyens 54 de mesure est notamment mais non exclusivement utilisé lors d'une phase de démarrage effectuée dans des conditions de température extérieure inférieure ou égale à 0°C.

Les moyens 54 de mesure de température sont également susceptibles d'être utilisés lors d'une phase de fonctionnement du moteur pour commander sélectivement les moyens 52 de chauffage afin de prévenir tout risque de solidification des condensats 50 lorsque, en raison de la température intérieure mesurée, un tel risque de gel existe.

On décrira ci-après plus précisément la figure 4 qui représente un diagramme logique illustrant un exemple de procédé de commande d'un dispositif 15 de refroidissement d'air de suralimentation selon le mode de réalisation, plus particulièrement lors d'une phase de fonctionnement du moteur 10.

La première étape E1 du procédé consiste à mesurer la température extérieure de l'air atmosphérique.

Grâce à la première étape E1, on détermine certes s'il existe ou non un risque de gel des condensats 50 pouvant être présents dans les moyens 48 de récupération mais on recherche avant tout à déterminer si la circulation devrait être avantageusement dérivée vers le conduit 56 de dérivation.

Si la température extérieure est supérieure à 0°C les moyens 52 de chauffage sont alors maintenus à l'état passif et les moyens 58 de régulation en position fermée, le procédé se poursuit directement par l'étape E finale tel qu'illustré par la flèche sur la droite de la figure 4.

Lorsque la température extérieure est inférieure à 0°C, on commande suivant une deuxième étape E2 l'ouverture des moyens 58 de régulation pour dériver la circulation vers le conduit 56 de dérivation.

Avantageusement, une telle dérivation permet de limiter la formation de condensats 50 dans le refroidisseur 40 d'air de suralimentation.

La troisième étape E3 consiste à démarrer le moteur 10 qui fonctionne alors sans utiliser ledit refroidisseur 40 d'air de suralimentation.

La quatrième étape E4 consiste à commander les moyens 52 de chauffage à l'état actif pour chauffer les condensats 50 et/ou les moyens 48 de récupération recueillant les condensats 50.

Avantageusement, le pilotage de la durée de chauffage est effectué en fonction de la température intérieure mesurée par les moyens 54 de mesure.

En variante, les moyens 52 de chauffage sont commandés à l'état actif pendant une durée déterminée.

La cinquième étape E5 consiste à commander la fermeture des moyens 58 de régulation pour rétablir la circulation à travers le refroidisseur 40 d'air de suralimentation.

La sixième étape E6 consiste à rétablir le fonctionnement normal du moteur 10.

En effet grâce au chauffage réalisé à la quatrième étape E4, les condensats 50 sont au moins en partie à l'état liquide et vont pouvoir être éliminés et cela malgré une température extérieure qui est inférieure ou égale à 0°C.

Tel que représenté par une flèche en pointillés, le procédé de commande peut alors s'interrompre après la cinquième étape E5 qui est alors suivi de l'étape E finale.

De préférence, le procédé de commande consiste cependant à exercer une surveillance de la température intérieure mesurée par l'intermédiaire des moyens 54 et ceci afin d'éviter qu'une fois interrompu le chauffage par les moyens 52 de chauffage une solidification des condensats 50 ne puisse survenir.

La septième étape E7 de surveillance correspond à la mise en œuvre d'une étape similaire à la quatrième étape E4 et consistant à mesurer la température intérieure avec les moyens 54 de mesure afin de pouvoir commander sélectivement les moyens 52 de chauffage si ladite température intérieure mesurée venait à être inférieure ou égale à 0°C.

Dans ce mode de réalisation, les moyens 54 de mesure de la température au niveau des moyens 48 de récupération des condensats 50, dite température intérieure, sont avantageusement utilisés en dehors d'une phase de démarrage pour déterminer si l'utilisation des moyens 52 de chauffage est requise ou pas.

Bien entendu la température intérieure au niveau des moyens 48 de récupération des condensats 50 ne peut être négative si la température extérieure de l'air n'est pas inférieure ou égale à 0°C.

Le dispositif 15 de refroidissement d'air de suralimentation du moteur 10 à combustion interne selon l'invention équipe avantageusement un moteur 10 comportant un dispositif 30 de recirculation des gaz 34 d'échappement et préférentiellement un dispositif 30 de recirculation des gaz 34 d'échappement de type « à basse pression ».

## Revendications

1. Dispositif (15) de refroidissement d'air de suralimentation d'un moteur (10), comportant un refroidisseur (40) d'air de suralimentation pour refroidir, en amont d'une partie (14) d'admission d'air du moteur (10), un air (38) issu d'un compresseur (28) de suralimentation lié à rotation à une turbine (26) qui est entraînée en rotation par des gaz d'échappement du moteur, ledit refroidisseur (40) d'air de suralimentation étant configuré pour être, en fonctionnement, agencé sensiblement verticalement de manière à permettre un écoulement des condensats (50) vers des moyens (48) de récupération destinés à recueillir lesdits condensats (50), ledit dispositif (15) comportant des moyens (52) de chauffage pour chauffer lesdits condensats (50) recueillis par les moyens (48) de récupération lorsque la température extérieure est inférieure ou égale à 0°C, le dispositif (15) comportant au moins un conduit (56) de dérivation, dit de by-pass, du refroidisseur (40) d'air de suralimentation et des moyens (58) de régulation associés audit conduit (56) pour réguler la circulation,
**caractérisé en ce que**
lesdits moyens (52) de chauffage sont commandés sélectivement en fonction d'une température intérieure mesurée par des moyens (54) de mesure de la température au niveau desdits moyens (48) de récupération des condensats (50) et **en ce que** lesdits moyens (58) de régulation sont commandés sélectivement en ouverture ou en fermeture en fonction d'au moins un paramètre de fonctionnement, tel que la température extérieure, de telle sorte que lorsque la température extérieure est inférieure ou égale à 0°C, les moyens (58) de régulation sont commandés en position ouverte pour dériver l'air (38) dans le conduit (56) de dérivation.

2. Dispositif selon la revendication 1, **caractérisé en ce que** les moyens (52) de chauffage sont agencés au niveau des moyens (48) de récupération afin de créer un changement d'état d'au moins une partie desdits condensats (50).

3. Dispositif selon l'une des revendications 1 ou 2, **caractérisé en ce que** lesdits moyens (52) de chauffage comportent au moins une résistance électrique.

4. Dispositif selon l'une quelconque des revendications 1 à 3, **caractérisé en ce que** les moyens (52) de chauffage sont commandés sélectivement, respectivement entre un état passif et un état actif de chauffage, en fonction d'au moins un paramètre de fonctionnement.

5. Dispositif selon la revendication 4, **caractérisé en ce que** lesdits moyens (52) de chauffage sont commandés de l'état passif à l'état actif lorsque, ladite la température extérieure étant inférieure ou égale à 0°C, les condensats (50) recueillis par les moyens (48) de récupération sont susceptibles de se solidifier.

6. Dispositif selon l'une quelconque des revendications précédentes, **caractérisé en ce que** le dispositif (15) comporte lesdits moyens (54) de mesure de température pour mesurer une température intérieure au niveau desdits moyens (48) de récupération des condensats (50).

7. Dispositif selon l'une quelconque des revendications précédentes, **caractérisé en ce que** lesdits moyens (58) de régulation sont montés mobiles entre au moins une position ouverte dans laquelle lesdits moyens (58) de régulation autorisent la circulation à travers le conduit (56) de dérivation et au moins une position fermée dans laquelle lesdits moyens (58) de régulation interdisent la circulation à travers le conduit (56) de dérivation.

8. Dispositif selon l'une quelconque des revendications précédentes, **caractérisé en ce que** le dispositif (15) est relié à un dispositif (30) de recirculation des gaz d'échappement comportant au moins un conduit (32) de recirculation des gaz (34) d'échappement pour prélever les gaz d'échappement après la turbine (26), en aval d'un dispositif (25) de post-traitement des gaz d'échappement, et pour les réinjecter en amont du compresseur (28) d'air de suralimentation.

## Patentansprüche

1. Vorrichtung (15) zur Ladeluftkühlung eines Motors (10), die einen Ladeluftkühler (40) aufweist, um stromabwärts vor einem Luftansaugteil (14) des Motors (10) eine von einem Lader (28) stammende Luft (38) zu kühlen, der mit einer Turbine (26) rotierend verbunden ist, die von Abgasen des Motors in Drehung versetzt wird, wobei der Ladeluftkühler (40) konfiguriert ist, im Betrieb im Wesentlichen senkrecht angeordnet zu sein, um ein Fließen der Kondensate (50) zu Rückgewinnungseinrichtungen (48) zu erlauben, die dazu bestimmt sind, die Kondensate (50) aufzufangen,
wobei die Vorrichtung (15) Heizeinrichtungen (52) aufweist, um die von den Rückgewinnungseinrichtungen (48) aufgefangenen Kondensate (50) zu erwärmen, wenn die Außentemperatur niedriger als oder gleich 0°C ist, wobei die Vorrichtung (15) mindestens einen Bypasskanal genannten Abzweigkanal (56) des Ladeluftkühlers (40) und dem Kanal (56) zugeordnete Regeleinrichtungen (58) aufweist, um die Zirkulation zu regeln,
**dadurch gekennzeichnet, dass** die Heizeinrichtungen (52) selektiv abhängig von einer Innentemperatur gesteuert werden, die von Messeinrichtungen (54) der Temperatur im Bereich der Rückgewinnungseinrichtungen (48) der Kondensate (50) gemessen wird,
und dass die Regeleinrichtungen (58) selektiv abhängig von mindestens einem Betriebsparameter wie der Außentemperatur in die Öffnungs- oder Schließstellung gesteuert werden, so dass, wenn die Außentemperatur niedriger als oder gleich 0°C ist, die Regeleinrichtungen (58) in die offene Stellung gesteuert werden, um die Luft (38) in den Abzweigkanal (56) abzuzweigen.

2. Vorrichtung nach Anspruch 1, **dadurch gekennzeichnet, dass** die Heizeinrichtungen (52) im Bereich der Rückgewinnungseinrichtungen (48) angeordnet sind, um eine Zustandsänderung mindestens eines Teils der Kondensate (50) zu erzeugen.

3. Vorrichtung nach einem der Ansprüche 1 oder 2, **dadurch gekennzeichnet, dass** die Heizeinrichtungen (52) mindestens einen elektrischen Widerstand aufweisen.

4. Vorrichtung nach einem der Ansprüche 1 bis 3, **dadurch gekennzeichnet, dass** die Heizeinrichtungen (52) abhängig von mindestens einem Betriebsparameter selektiv zwischen einem passiven und einem aktiven Heizzustand gesteuert werden.

5. Vorrichtung nach Anspruch 4, **dadurch gekennzeichnet, dass** die Heizeinrichtungen (52) vom passiven Zustand in den aktiven Zustand gesteuert werden, wenn, da die Außentemperatur niedriger als oder gleich 0°C ist, die von den Rückgewinnungseinrichtungen (48) aufgefangenen Kondensate (50) erstarren können.

6. Vorrichtung nach einem der vorhergehenden Ansprüche, **dadurch gekennzeichnet, dass** die Vorrichtung (15) die Temperaturmesseinrichtungen (54) aufweist, um eine Innentemperatur im Bereich der Rückgewinnungseinrichtungen (48) der Kondensate (50) zu messen.

7. Vorrichtung nach einem der vorhergehenden Ansprüche, **dadurch gekennzeichnet, dass** die Regeleinrichtungen (58) zwischen mindestens einer offenen Stellung, in der die Regeleinrichtungen (58) die Zirkulation durch den Abzweigkanal (56) erlauben, und mindestens einer geschlossenen Stellung beweglich montiert sind, in der die Regeleinrichtungen (58) die Zirkulation durch den Abzweigkanal (56) versperren.

8. Vorrichtung nach einem der vorhergehenden Ansprüche, **dadurch gekennzeichnet, dass** die Vorrichtung (15) mit einer Rückführungsvorrichtung (30) der Abgase verbunden ist, die mindestens einen Rückführungskanal (32) der Abgase (34) aufweist, um die Abgase nach der Turbine (26) stromabwärts hinter einer Nachbehandlungsvorrichtung (25) der Abgase zu entnehmen und sie stromaufwärts vor dem Ladeluftverdichter (28) wieder einzuspeisen.

## Claims

1. Device (15) for cooling forced-induction air for an engine (10), comprising a forced-induction air cooler (40) for cooling, upstream of an air intake part (14) of the engine (10), air (38) coming from a forced-induction compressor (28) that is rotationally connected to a turbine (26) which is driven in rotation by exhaust gases from the engine, said forced-induction air cooler (40) being configured such that, in operation, it is arranged essentially vertically so as to allow condensates (50) to flow towards recovery means (48) intended to collect said condensates (50), said device (15) comprising heating means (52) for heating said condensates (50) collected by the recovery means (48) when the external temperature is less than or equal to 0°C, the device (15) comprising at least one bypass duct (56) for bypassing the forced-induction air cooler (40) and regulating means (58) associated with said duct (56) in order to regulate the flow, **characterized in that** said heating means (52) are selectively controlled depending on an internal temperature that is measured by means (54) for measuring the temperature at said means (48) for recovering the condensates (50) and **in that** said regulating means (58) are selectively ordered to open or to close depending on at least one operating parameter, such as the external temperature, in such a way that, when the external temperature is less than or equal to 0°C, the regulating means (58) are ordered into the open position in order to divert the air (38) into the bypass duct (56).

2. Device according to Claim 1, **characterized in that** the heating means (52) are arranged at the recovery means (48) so as to bring about a change of state of at least part of said condensates (50).

3. Device according to either of Claims 1 and 2, **characterized in that** said heating means (52) comprise at least one electrical resistance.

4. Device according to any one of Claims 1 to 3, **characterized in that** the heating means (52) are selectively controlled between a passive state and an active heating state, depending on at least one operating parameter.

5. Device according to Claim 4, **characterized in that** said heating means (52) are ordered to switch from the passive state to the active state when, the external temperature being less than or equal to 0°C, the condensates (50) collected by the recovery means (48) are liable to solidify.

6. Device according to any one of the preceding claims, **characterized in that** the device (15) comprises temperature measuring means (54) for measuring an internal temperature at said means (48) for recovering the condensates (50).

7. Device according to any one of the preceding claims, **characterized in that** said regulating means (58) are mounted so as to be able to move between at least one open position, in which said regulating means (58) permit the flow through the bypass duct (56), and at least one closed position, in which said regulating means (58) prevent the flow through the bypass duct (56) .

8. Device according to any one of the preceding claims, **characterized in that** the device (15) is connected to an exhaust gas recirculation device (30) comprising at least one duct (32) for recirculation of the exhaust gases (34) in order to take the exhaust gases downstream of the turbine (26), and downstream of an exhaust gas post-treatment device (25), and to reinject them upstream of the forced-induction air compressor (28).
